(19) Europäisches Patentamt
European Patent Office
Office européen des brevets

(11) **EP 1 717 914 B1**

(12) **FASCICULE DE BREVET EUROPEEN**

(45) Date de publication et mention
de la délivrance du brevet:
**29.10.2008 Bulletin 2008/44**

(51) Int Cl.:
***H01S 3/06*** *(2006.01)*     ***H01S 3/14*** *(2006.01)*
***H01S 3/0941*** *(2006.01)*

(21) Numéro de dépôt: **06290550.0**

(22) Date de dépôt: **05.04.2006**

(54) **Elément actif pour source laser et source laser comportant un tel élément actif**

Aktives Element für Laser-Quelle und Laser-Quelle mit diesem aktiven Element

Active element for laser source and laser source comprising such active element

(84) Etats contractants désignés:
**DE FR GB IT SE**

(30) Priorité: **28.04.2005 FR 0504280**

(43) Date de publication de la demande:
**02.11.2006 Bulletin 2006/44**

(73) Titulaire: **COMPAGNIE INDUSTRIELLE DES LASERS CILAS**
**45100 Orléans (FR)**

(72) Inventeurs:
• **Montagne, Jean-Eucher**
**45000 Orleans (FR)**

• **Cabaret, Louis**
**91410 Plessis St Benoist (FR)**

(74) Mandataire: **Bonnetat, Christian**
**Cabinet Bonnetat**
**29, rue de St. Pétersbourg**
**75008 Paris (FR)**

(56) Documents cités:
**EP-A- 0 583 944**     **EP-A- 1 160 940**
**WO-A-99/60673**     **DE-C1- 19 531 756**
**FR-A- 2 803 697**     **US-A- 5 084 889**
**US-A- 5 572 541**     **US-A1- 2005 018 743**
**US-B1- 6 351 477**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne un élément actif pour source laser, ainsi qu'une source laser comportant un tel élément actif.

Plus précisément, ladite source laser est du type comportant :

- un élément actif comprenant un barreau allongé, de section transversale généralement circulaire, mais non exclusivement, comportant une matrice dopée susceptible d'absorber un faisceau de pompage pour amplifier un rayonnement laser se propageant longitudinalement avec ou sans rebond ;
- un système de pompage, comportant des diodes (laser) de pompage susceptibles d'émettre un faisceau de pompage ;
- un système optique de transport pour diriger le faisceau de pompage émis par ledit système de pompage dans ledit élément actif de manière à obtenir un pompage longitudinal ; et
- une cavité optique permettant d'extraire ledit rayonnement laser.

On sait que pour être efficace, le faisceau de pompage doit être spectralement accordé au spectre d'absorption de l'élément actif de telle sorte que ledit faisceau de pompage soit absorbé et transfère son énergie vers l'ion (terre rare ou métal de transition par exemple) dopant ledit élément actif.

On sait également que les diodes (laser) de pompage présentent un spectre d'émission, généralement de quelques nanomètres de large, qui se décale de 0,25 à 0,3 nanomètre par degré, lorsque l'on fait varier la température desdites diodes de pompage.

Pour assurer une conformité satisfaisante de la longueur d'onde du faisceau de pompage (issu desdites diodes de pompage) avec le spectre d'absorption du milieu actif, il est connu de monter lesdites diodes sur des modules Peltier, dont la fonction est de stabiliser leur température à mieux que 0,5°C de sorte qu'un centrage de longueur d'onde est assuré à au moins 0,2 nm.

Toutefois, notamment dans le cadre d'applications militaires, les paramètres de compacité, de consommation et de rapidité de mise en oeuvre revêtent une importance particulière. Aussi, l'utilisation de modules Peltier, qui induit une consommation importante et qui nécessite un temps de stabilisation de l'ordre de la minute, est un frein à l'emploi de sources laser pompées par diode(s) dans des systèmes compacts. Il en va de même pour d'autres systèmes de stabilisation actifs de la température des diodes. Aussi, la technologie toujours employée actuellement, par exemple pour des désignateurs laser terrestres, est une technologie de pompage par flash, qui est peu rentable et encombrante.

Pour essayer de remédier à ce problème, il convient :

- soit d'augmenter la tolérance du milieu actif à la dérive de longueur d'onde, ce qui est proposé par exemple par le brevet FR-2 803 697, pour lequel le faisceau de pompage est guidé pour passer plusieurs fois au travers du milieu actif ;
- soit de mettre en oeuvre une stabilisation passive de l'émission de la longueur d'onde des diodes de pompage, comme proposé par exemple dans la demande de brevet US-2005/0018743 qui décrit l'utilisation d'un système incluant un ou plusieurs Réseaux de Bragg en Volume (RBV ou VBG, pour "Volume Bragg Grating" en anglais) afin de conditionner une ou plusieurs caractéristiques d'émission du laser.

Toutefois, les solutions précédentes permettent uniquement d'obtenir une insensibilité sur 3 à 10 nanomètres correspondant à une dérive de température des diodes de 15 à 40°C. Une telle plage d'insensibilité thermique est largement insuffisante pour utiliser le système de pompage, par exemple dans un désignateur laser terrestre, entre -40°C et +70°C.

La présente invention a pour objet de fournir un élément actif et une source laser permettant d'obtenir une insensibilité thermique de l'émission laser sur plus de 15 nanomètres.

On notera que, concernant un pompage longitudinal, la principale difficulté d'un pompage à des niveaux élevés de puissance (supérieurs à 500 W) réside dans la production d'effets parasites tels qu'une amplification d'émission spontanée (amplification ASE ci-après) ou des modes d'émission parasites (modes MEP ci-après). L'amplification ASE provient d'une radiation spontanée, naturellement émise par les ions excités par le faisceau de pompage et amplifiée par le gain résultant de la présence de ces ions excités. Les modes MEP, quant à eux, proviennent de la combinaison :

- de réflexions présentes aux bords de l'élément actif et/ou sur tout autre réflecteur ; et
- du gain laser provenant des ions excités.

La combinaison de ces deux facteurs engendre une émission laser parasite suivant un ou plusieurs axes qui sont habituellement distincts de l'axe laser principal.

L'amplification ASE est un paramètre gouverné essentiellement par le gain et la longueur maximale de gain possible dans l'élément actif. La seule possibilité de diminuer son effet est de limiter la longueur de gain ou la valeur du gain.

En outre, les modes MEP sont gouvernés par le gain et la présence de réflexions parasites qui renvoient des photons vers le laser et permettent ainsi un cyclage à gain de ces photons.

Par ailleurs, on connaît :

- par le document EP-0 583 944, un élément actif pour source laser, qui comprend un premier revêtement qui réfléchit le faisceau de pompage et un second revêtement qui absorbe le rayonnement laser ;

- par le document US-5 572 541, un élément actif pour source laser, qui comprend également un premier revêtement qui réfléchit le faisceau de pompage et un second revêtement qui absorbe le rayonnement laser ; et

- par le document DE-195 31 756, un moyen d'absorption destiné à absorber le rayonnement laser.

La présente invention a pour objet de remédier aux inconvénients précités. Elle concerne un élément actif pour source laser, permettant d'obtenir une insensibilité thermique importante, tout en limitant la génération d'effets parasites du type précité (amplification ASE et modes MEP).

A cet effet, selon l'invention, ledit élément actif du type comportant :

- un barreau allongé qui comprend une matrice dopée susceptible d'absorber au moins un faisceau de pompage, pour amplifier au moins un rayonnement laser se propageant longitudinalement ;
- un premier revêtement qui est agencé à la périphérie dudit barreau et qui est susceptible de réfléchir au moins une partie (de préférence au moins 80%) dudit faisceau de pompage ; et
- un moyen d'absorption permettant d'absorber au moins une partie (de préférence au moins 70%) d'un rayonnement qui traverse la périphérie dudit barreau et qui présente une longueur d'onde sensiblement égale à celle dudit rayonnement laser,

est remarquable en ce que la longueur et le dopage dudit barreau allongé sont tels que la proportion d'énergie de pompage absorbée par ledit barreau allongé est supérieure à 90% pour la longueur d'onde d'une plage spectrale de fonctionnement qui présente le coefficient d'absorption le plus faible.

Ainsi, grâce audit premier revêtement, le faisceau de pompage est susceptible d'être guidé et maintenu pour l'essentiel (au moins 80%) dans ledit barreau, ce qui permet d'obtenir un pompage particulièrement efficace. De plus, grâce audit moyen d'absorption, les rayonnements parasites qui traversent le barreau sont absorbés pour l'essentiel, ce qui permet de supprimer les modes MEP et de minimiser la longueur d'amplification ASE.

On sait que la proportion d'énergie de pompage absorbée par l'élément actif dépend, d'une part, du coefficient d'absorption $\alpha(\lambda)$ de l'élément actif et, d'autre part, de la longueur de matériau L, traversée par le faisceau de pompage. Cette proportion d'énergie absorbée Abs vérifie la relation Abs = 1-Exp[$-\alpha(\lambda)$L]. Aussi, pour optimiser ladite proportion Abs, il convient de maximiser, d'une part, ledit coefficient d'absorption $\alpha$ pour toutes les longueurs d'onde $\lambda$ intéressantes et, d'autre part, ladite longueur L traversée par le faisceau de pompage. Selon l'invention, pour que la proportion d'énergie de pompage absorbée Abs reste toujours supérieure à environ 90% pour l'ensemble de la plage spectrale visée, la longueur d'absorption L est donc adaptée au coefficient $\alpha(\lambda)$ le plus faible.

On sait, par ailleurs, qu'il est difficile d'extraire convenablement l'énergie d'un grand volume de milieu actif (élément actif), dans lequel l'énergie de pompage serait dispersée. Aussi, la configuration proposée est une configuration de pompage longitudinal, pour laquelle la longueur d'absorption du faisceau de pompage peut être longue, pourvu que celui-ci soit colinéaire (ou quasiment) à l'axe de la source laser. Selon l'invention, le milieu actif est donc adapté pour recevoir et véhiculer un faisceau de pompage se propageant de manière colinéaire (ou quasiment) à l'axe du barreau allongé.

Dans un premier mode de réalisation, ledit premier revêtement est formé de manière à correspondre également audit moyen d'absorption, c'est-à-dire que l'absorption dudit rayonnement (qui présente la longueur d'onde du rayonnement laser) est directement réalisée par ce premier revêtement qui présente donc une double fonction de réflexion et d'absorption. Dans ce cas, de préférence, le matériau dudit premier revêtement est chargé avec une substance absorbante de nature organique ou inorganique.

Dans un second mode de réalisation, ledit moyen d'absorption correspond à un second revêtement qui est agencé sur la face externe dudit premier revêtement.

Dans ce dernier cas, dans une variante de réalisation particulière, ledit barreau allongé présente une section transversale circulaire, ledit premier revêtement comporte un matériau d'interface (en particulier une colle, un polymère ou un matériau inorganique) qui assure une jonction thermique et mécanique, qui est prévu sur la périphérie dudit barreau et qui présente un indice de réfraction inférieur à celui dudit barreau, et ledit second revêtement comporte une monture en matériau absorbant, qui entoure ledit barreau muni dudit matériau d'interface.

Dans une variante de réalisation susceptible d'être associée à l'un quelconque des premier et second modes de réalisation précédents, ledit premier revêtement comporte une couche mince qui présente un indice de réfraction inférieur à celui dudit barreau. Dans une autre variante de réalisation susceptible d'être associée à l'un quelconque des premier et second modes de réalisation précédents, ledit premier et/ou second revêtement est réalisé à partir d'un matériau microstructuré.

En outre, dans une autre variante de réalisation, ledit barreau présente des faces latérales planes, et ledit premier revêtement comporte des plaques qui sont soudées sur lesdites faces latérales planes dudit barreau et qui sont réalisées en un matériau présentant un indice de réfraction inférieur à celui dudit barreau.

Avantageusement, ledit barreau est formé d'au moins un matériau présentant une variation longitudinale de dopage avec un dopage le plus faible, limité à une valeur prédéterminée, par exemple 0,5%, au niveau d'une face d'entrée du faisceau de pompage. Ainsi, on agit sur le gain, en limitant le dopage en début de barreau (au niveau de ladite face d'entrée) pour limiter l'absorption dans cette zone et donc limiter le gain transverse, ce qui permet de réduire à la fois l'apparition d'une amplification ASE et l'apparition de modes MEP. De plus, le barreau peut comporter une zone non dopée devant sa face d'entrée.

La baisse de dopage en début de barreau diminue l'efficacité d'absorption. Il importe donc de prévoir, au-delà des premiers millimètres d'absorption, un niveau de dopage plus élevé.

Pour maximiser l'absorption du faisceau de pompage, ledit élément actif peut comporter avantageusement, au moins partiellement, comme matériau, un cristal YVO4/Nd.

Dans un premier mode de réalisation, ledit matériau de l'élément actif présente une variation longitudinale de dopage qui est continue, tandis que, dans un second mode de réalisation, il présente une variation longitudinale de dopage qui est par pas.

Dans le premier mode de réalisation, ledit matériau comporte, de préférence, une céramique à gradient de dopage et, dans le second mode, plusieurs cristaux présentant des dopages différents. Ces deux modes peuvent être par ailleurs combinés.

En outre, dans une variante de réalisation particulière, ledit matériau comporte à la fois un cristal YAG/Nd et un cristal YV04/Nd. Comme les bandes d'absorption de ces deux cristaux sont différentes, la gamme d'insensibilité est ainsi étendue. De plus, ledit cristal YAG/Nd est, de préférence, disposé en amont dudit cristal YV04/Nd.

La présente invention concerne également une source laser du type comportant :

- un élément actif pour source laser ;
- un système de pompage muni de diodes laser de pompage qui sont susceptibles d'émettre au moins un faisceau de pompage ;
- un système optique de transport pour diriger le faisceau de pompage émis par lesdites diodes laser dans ledit élément actif de manière à obtenir un pompage longitudinal ; et
- une cavité optique permettant d'extraire au moins un rayonnement laser.

Selon l'invention, ladite source laser est remarquable en ce que ledit élément actif est du type précité.

De façon avantageuse, ledit système de pompage est formé de manière à engendrer un faisceau de pompage :

- qui comporte une stabilité de l'énergie déposée stable à plus de 20% sur plusieurs dizaines de degrés ; et/ou

- qui est compris dans un angle solide prédéterminé relatif audit barreau.

Dans un mode de réalisation particulier, ledit système de pompage comporte des modules (ou empilements) de diodes, formés de semi-conducteurs issus de différents disques (wafers). La somme des émissions spectrales des différents semi-conducteurs engendre ainsi un spectre plus large que celui d'une diode unique. De plus, avantageusement, chaque module de diodes peut comporter un moyen de refroidissement, ce qui permet d'obtenir une situation thermique spécifique et un fonctionnement également étalé du spectre.

Dans un autre mode de réalisation, ladite source laser peut comporter une structure dans laquelle les diodes laser dissipent leur énergie.

Par ailleurs, de façon avantageuse :

- ladite source laser comporte, de plus, des moyens pour engendrer au moins un double passage du faisceau de pompage dans l'élément actif ; et/ou
- ledit système de pompage comporte deux unités de pompage destinées à pomper le barreau par ses deux extrémités.

Les figures du dessin annexé feront bien comprendre comment l'invention peut être réalisée. Sur ces figures, des références identiques désignent des éléments semblables.

La figure 1 est le schéma synoptique d'une source laser conforme à l'invention.
Les figures 2 et 3 montrent schématiquement deux exemples d'élément actif conforme à l'invention.

L'élément actif 1 conforme à l'invention comporte un barreau allongé 2 qui comprend une matrice dopée susceptible d'absorber un faisceau de pompage 3, pour amplifier au moins un rayonnement laser 4 se propageant longitudinalement selon un axe X-X.

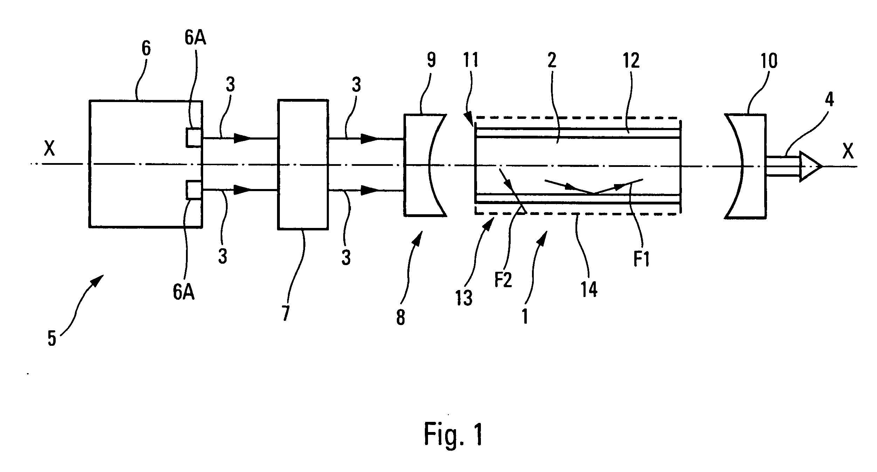

Cet élément actif 1 peut être intégré dans une source laser 5 telle que représentée à titre d'exemple sur la figure 1.

Ladite source laser 5 comporte, de façon usuelle, en plus dudit élément actif 1 :

- un système de pompage 6 usuel, qui comprend des diodes de pompage 6A de type laser et qui est susceptible d'émettre au moins un faisceau de pompage 3 ;
- un système optique de transport 7 usuel, pour diriger le faisceau de pompage 3 émis par ledit système de pompage 6 dans ledit élément actif 1 de manière à obtenir un pompage longitudinal ; et
- une cavité optique 8 usuel, d'axe X-X, comprenant notamment un miroir réfléchissant 9 et un miroir 10 légèrement transparent, qui sont placés en regard l'un de l'autre. Cette cavité optique 8 confère au rayonnement laser 4 obtenu par l'amplification laser et émis à travers ledit miroir 10 selon l'axe X-X, ses caractéristiques de directivité et de géométrie.

Selon l'invention, ledit élément actif 1 comporte de plus :

-   un revêtement 12 qui est agencé à la périphérie dudit barreau 2 (c'est-à-dire sur sa ou ses faces extérieures) et qui présente un indice de réfraction permettant de réfléchir au moins 80% dudit faisceau de pompage 3, comme illustré pour un faisceau F1 sur la figure 1 ; et
-   un moyen d'absorption 13 qui permet d'absorber au moins 70% de tout rayonnement qui traverse la périphérie dudit barreau 2 et qui présente une longueur d'onde sensiblement égale à celle dudit rayonnement laser 4, comme représenté pour un faisceau F2 sur la figure 1. Par absorbée à 70%, il faut comprendre que moins de 30% de rayonnement est renvoyé en moyenne vers le barreau 2. On sait que la fraction réfléchie dépend de l'angle d'incidence de la radiation considérée.

Ainsi, grâce audit revêtement 12, le faisceau de pompage 3 est susceptible d'être guidé et maintenu presqu'en totalité (au moins à 80%) dans ledit barreau 2, ce qui permet d'obtenir un pompage particulièrement efficace. De plus, grâce audit moyen d'absorption 13 précisé ci-dessous, les rayonnements parasites qui traversent le barreau 2 sont absorbés pour l'essentiel, ce qui permet de supprimer des modes MEP et de minimiser la longueur d'amplification ASE.

Par ailleurs, selon l'invention, les contraintes de dimensionnement relatives aux caractéristiques précédentes sont les suivantes :

A/ guidage du faisceau de pompage 3 dans une ouverture numérique au moins égale à celle des diodes de pompage 6A après passage dans une optique de focalisation, ce qui implique un indice de réfraction faible du revêtement 1 2 ;

B/ longueur et dopage du barreau 2 tels que la proportion d'énergie de pompage absorbée Abs est supérieure à environ 90%, pour la longueur d'onde de pompage la moins absorbante de la plage spectrale de fonctionnement ; et

C/ évacuation hors de l'élément actif 1 (barreau 2) et/ou absorption d'un maximum de photons de fluorescence, ce qui implique que l'indice de réfraction de la zone périphérique (revêtement 12, moyen d'absorption 13) soit le plus proche possible de celui de l'élément actif 1 (barreau 2).

Les contraintes A et C précitées ne sont pas totalement compatibles et demandent donc de trouver un compromis.

Pour guider l'ensemble du faisceau de pompage 3 à l'intérieur du barreau 2 (d'indice nyag), le demi angle total θ d'émission des diodes de pompage 6A doit correspondre à l'angle d'incidence critique ic sur l'interface du revêtement 12 (d'indice de réfraction n). On a ic=arcsin(n/nyag) et on calcule que l'indice de réfraction n présente une valeur qui ne doit pas être substantiellement plus forte que :

$$n = \sqrt{nyag^2 - \sin^2\theta}\,.$$

Par exemple, si θ est de l'ordre de 45 degrés, avec nyag = 1,819, l'indice n vaut 1,64.

L'émission de fluorescence a encore une possibilité d'être piégée dans un angle solide limité par une ouverture de (π/2-ic) soit 25 degrés dans l'exemple considéré. Dans la pratique, ceci accroît notablement le seuil d'apparition des modes MEP à condition de s'assurer qu'aucun chemin fermé ne soit contenu dans cet angle solide. Le rayonnement non guidé est ensuite absorbé dans un matériau à absorption sélective à la longueur d'onde du rayonnement laser 4 ou simplement évacué en dehors du barreau 2.

Dans un premier mode de réalisation, ledit revêtement 12 est formé de manière à correspondre également audit moyen d'absorption 13, c'est-à-dire que l'absorption du rayonnement (qui présente la longueur d'onde du rayonnement laser 4) est directement réalisée par ce revêtement 12 qui présente donc une double fonction de réflexion et d'absorption. Dans ce premier mode de réalisation, le caractère absorbant du revêtement 12 réduit également l'apparition de modes MEP pour les angles les plus rasants car, par absorption de l'onde évanescente, la réflexion est moins efficace. La réflexion interne sur le revêtement 12 dépend, d'une part, de l'angle d'incidence et, d'autre part, de l'indice complexe du revêtement 12, à savoir de sa partie réelle (n) et de son coefficient d'absorption donnant la partie imaginaire. Cet indice complexe est choisi de sorte que le niveau de réflexion pour chaque angle d'incidence soit suffisamment faible pour interdire les modes MEP comportant cette incidence.

En outre, dans ce premier mode de réalisation où ledit revêtement 12 correspond audit moyen d'absorption 13, cet ensemble peut être composé d'une colle chargée avec un matériau absorbant en poudre ou en solution dans la colle. Cette poudre ou cette solution peut être composée, par exemple, d'ions de terre rare ou de métal de transition ou bien de matériaux organiques qui sont absorbants pour le ou les rayonnements laser.

Par ailleurs, dans un second mode de réalisation, ledit moyen d'absorption 13 comprend un revêtement 14 qui est agencé sur la face externe (ou les faces externes) dudit revêtement 12, comme représenté en traits interrompus sur la figure 1.

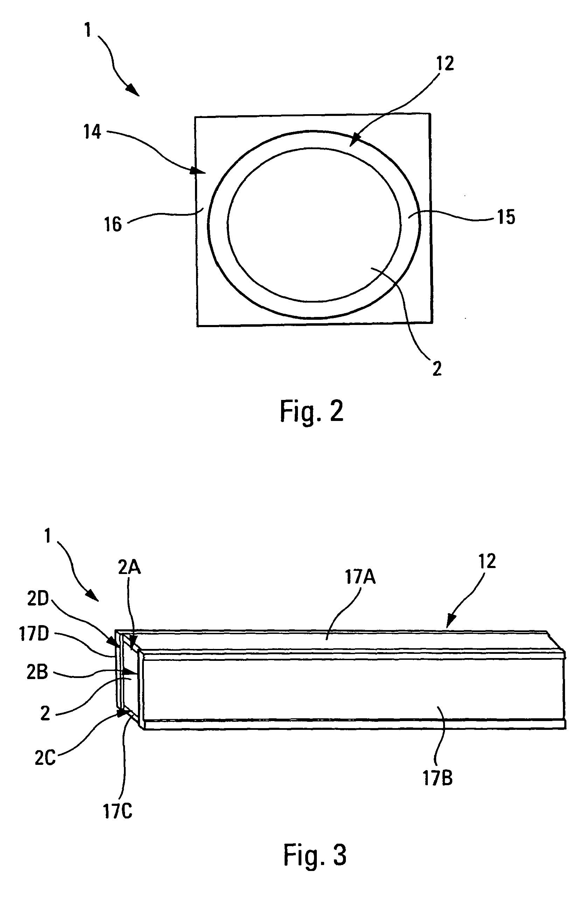

Dans ce dernier cas, dans une variante de réalisation particulière représentée sur la figure 2, ledit barreau allongé 2 présente une section transversale circulaire, ledit revêtement 12 comporte un matériau d'interface 1 5 qui est prévu sur la périphérie dudit barreau 2 sensiblement selon une forme annulaire et qui présente un indice de réfraction inférieur à celui dudit barreau et ledit revêtement 14 comporte une monture 16 en matériau absorbant, qui entoure ledit barreau 2 munie dudit matériau d'interface 15. Par matériau d'interface, on entend tout matériau assurant une jonction thermique et mécanique entre le barreau 2 et la monture 16 qui l'entoure, sans que ce matériau d'interface ait forcément des caractéristiques d'accrochage prononcées. Il peut par exemple s'agir d'un polymère, d'une colle usuelle ou bien d'un sol-gel. Pour que la fonction de transfert thermique entre le barreau 2 et la monture 1 6 ne soit pas trop compromise, on préfère une épaisseur de matériau d'interface 15, qui reste inférieure à 100 $\mu$m. Ladite monture 16 est susceptible d'absorber l'émission d'un rayonnement à 1 micromètre qui peut circuler dans cette zone. Dans le cas de l'exemple du YAG dopé Nd avec un angle $\theta$ de 45°, ladite colle 15 devrait avoir un indice de réfraction proche de 1,64. Cet indice, nettement plus élevé que celui de la plupart des colles commerciales, peut par exemple être atteint en utilisant une colle commerciale, dans laquelle est introduite de la poudre d'un matériau transparent d'indice de réfraction élevé. Cette poudre peut être en particulier une poudre nanométrique d'oxyde telle que Ti02, Y203, Sm203, Sc203, Lu203, Gd203, Zr02 ou YAlO3.

Un autre mode de réalisation non représenté de l'élément actif 1 comprend un barreau 2 de section quelconque, dont la périphérie est revêtue d'une couche mince 12, d'indice de réfraction inférieur à celui dudit barreau 2. Cette couche mince 12 est soit absorbante à la longueur d'onde du rayonnement laser 4, soit entourée d'un revêtement 14 absorbant.

Dans un autre mode de réalisation représenté sur la figure 3, le barreau 2 présente des faces latérales 2A, 2B, 2C, 2D qui sont planes, avec une section transversale de forme carrée par exemple. Sur les faces latérales 2A à 2D de ce barreau 2 sont soudées ou collées respectivement des plaques 17A, 17B, 17C, 17D réalisées en un matériau présentant un indice de réfraction plus faible que le barreau 2. De plus :

- lesdites plaques 17A à 17D sont suffisamment épaisses pour qu'un rayonnement présentant la longueur d'onde du rayonnement laser 4 ne puisse revenir dans le barreau 2 ; ou
- le matériau desdites plaques 17A à 17D est absorbant pour ladite longueur d'onde du rayonnement laser 4 ; ou
- lesdits plaques 17A à 17D sont revêtues sur leur face externe d'un revêtement non représenté qui est absorbant pour ladite longueur d'onde du rayonnement laser 4.

Par ailleurs, dans un mode de réalisation particulier, ledit barreau 2 de l'élément actif 1 est formé d'au moins un matériau présentant une variation longitudinale de dopage, selon l'axe X-X, avec le dopage le plus faible qui est limité à une valeur prédéterminée, par exemple 0,5%, au niveau de la face amont 11 (ou d'entrée du faisceau de pompage 3) dudit élément actif 1.

Ainsi, en limitant le dopage en début du barreau 2 (au niveau de ladite face amont 11), on limite l'absorption dans cette zone et donc le gain transverse, ce qui permet de réduire l'apparition à la fois d'une amplification ASE et de modes MEP.

La baisse de dopage en début du barreau 2 diminue l'efficacité d'absorption. Il importe donc de prévoir, au-delà d'une distance prédéterminée, par exemple quelques millimètres en aval de la face amont 11, un niveau de dopage plus élevé.

En outre, afin de maximiser l'absorption du faisceau de pompage 3, le barreau 2 de l'élément actif 1 comporte de préférence comme matériau, au moins en partie, un cristal YVO4/Nd.

Dans un premier mode de réalisation, ledit matériau du barreau 2 présente une variation longitudinale de dopage qui est continue, tandis que, dans un second mode de réalisation, il présente une variation longitudinale de dopage qui est par pas.

Dans le premier mode de réalisation, ledit matériau est de préférence un matériau à gradient de dopage. De tels matériaux peuvent être réalisés, de façon usuelle, par procédé céramique.

Il est également possible d'employer plusieurs cristaux de dopage progressif pour atteindre à l'entrée de chacun de ces derniers le gain maximal de démarrage de l'amplification ASE.

Un perfectionnement possible consiste à combiner un cristal de YAG/Nd et un cristal de YV04/Nd. Comme les bandes d'absorption de ces deux cristaux sont différentes, la gamme d'insensibilité est ainsi étendue. En particulier, l'absorption du cristal YV04/Nd est plus forte vers 808-815 nm, alors que le cristal YAG/Nd présente une bande d'absorption à 792-797 nm que ne possède pas le cristal YV04/Nd. Une telle combinaison est possible puisque les deux cristaux émettent chacun à 1064 nm.

Dans ce cas, si on place de plus le cristal YAG/Nd en amont dudit cristal YVO4/Nd, on obtient un avantage supplémentaire. En effet, le cristal YAG/Nd va être soumis à la puissance de pompage la plus forte et il présente une séquence efficace d'émission stimulée moins importante que le cristal YVO4/Nd. Il convertira donc l'absorption en un gain plus faible que si le cristal YV04/Nd était placé en amont, ce qui permet de repousser le seuil d'apparition d'effets parasites. Dans ce cas, on a également intérêt à conserver partiellement le cristal YV04/Nd afin d'assurer un gain longitudinal suffisant pour que l'effet laser soit efficace.

Pour les barreaux 2 composés d'un seul dopage et d'une seule matrice ou de plusieurs dopages différents et/ou de plusieurs matrices différentes, afin d'obtenir une insensibilité à la variation de longueur d'onde des diodes 6A, le milieu actif possède un dopage et une longueur qui sont tels que, avec un pompage longitudinal, la proportion d'énergie de pompage absorbée Abs pour la longueur d'onde la moins absorbante de la plage spectrale de fonctionnement, est supérieure à environ 90%. On a donc Abs= 1.Exp[-$\alpha(\lambda)$L] > 90%, soit $\alpha$($\lambda$)L > 2.3. Ainsi, à titre d'illustration, dans le cas où $\alpha(\lambda$ = 802 nm)=0,6 cm$^{-1}$ au minimum d'absorption, il faut que la longueur L de matériau dopé soit supérieure à 2.3/$\alpha$($\lambda$), soit L > 3,8 cm.

Par ailleurs, dans un mode de réalisation préféré, ledit système de pompage 6 comporte des modules (ou empilements) de diodes 6A, formés de semi-conducteurs issus de différents disques (waffers). La somme des émissions spectrales des différents semi-conducteurs engendre ainsi un spectre plus large que celui d'une diode unique. De plus, de préférence, chaque module de diodes 6A comporte un moyen de refroidissement individuel, ce qui permet d'obtenir un fonctionnement également étalé du spectre.

Dans un autre mode de réalisation, les diodes 6A ne sont pas refroidies activement, mais dissipent leur énergie, pendant une séquence limitée dans le temps, dans une structure solidaire, dont la montée en température va limiter leur propre élévation de température. La température de départ et cette élévation de température sont telles que leur longueur d'onde d'émission, pendant toute la séquence, reste comprise dans la plage spectrale de fonctionnement de sorte que, malgré une température éventuellement basse au départ de la séquence et une dérive de cette température au cours du temps, la source laser 1 garde un fonctionnement assez stable au cours de la séquence sans utiliser de moyen actif de stabilisation de la température.

En outre, dans un mode de réalisation particulier, ledit système de pompage 6 est formé de manière à engendrer un faisceau de pompage 3 qui comporte une stabilité de l'énergie déposée stable à plus de 20% sur plusieurs dizaines de degrés.

Par ailleurs, ladite source laser 5 comporte, de plus, des moyens non représentés pour engendrer au moins un double passage du faisceau de pompage 3 dans l'élément actif 1.

Dans un autre mode de réalisation particulier non représenté, le système de pompage 6 comporte deux unités de pompage qui peuvent pomper le barreau 2 respectivement par ses deux extrémités, et au moins un miroir dichroïque permettant de séparer le faisceau de pompage 3 du rayonnement laser 4. Dans ce cas, le barreau 2 comporte, de préférence, des extrémités proches des faces d'entrée du pompage, moins dopées, et un centre plus dopé. Dans le cas où un ou des miroirs dichroïques est employé pour pomper le barreau 2, la cavité laser dans laquelle peut être inséré le milieu actif peut être délimitée par des prismes de Porro, l'extraction du rayonnement se faisant alors par le centre.

**Revendications**

1. Elément actif pour source laser, ledit élément actif (1) comportant :

   - un barreau allongé (2) qui comprend une matrice dopée susceptible d'absorber au moins un faisceau de pompage (3), pour amplifier au moins un rayonnement laser (4) se propageant longitudinalement ;
   - un premier revêtement (12) qui est agencé à la périphérie dudit barreau (2) et qui est susceptible de réfléchir le faisceau de pompage (3) ; et
   - un moyen d'absorption (13) permettant d'absorber un rayonnement qui traverse la périphérie dudit barreau (2) et qui présente une longueur d'onde sensiblement égale à celle dudit rayonnement laser (4),

   **caractérisé en ce que** la longueur L du barreau allongé (2) est adaptée au coefficient d'absorption dudit barreau allongé (2), qui dépend de la longueur d'onde $\lambda$, et **en ce que** ladite longueur L est supérieure à 2,3/$\alpha(\lambda)$ avec $\alpha(\lambda)$ le coefficient d'absorption le plus faible sur une plage spectrale de fonctionnement.

2. Elément actif selon la revendication 1, **caractérisé en ce que** ledit premier revêtement (12) est formé de manière à correspondre également audit moyen d'absorption (13).

3. Elément actif selon la revendication 2, **caractérisé en ce que** le matériau dudit premier revêtement (12) est chargé avec une substance absorbante.

4. Elément actif selon la revendication 1, **caractérisé en ce que** ledit moyen d'absorption (13) correspond à un second revêtement (14) qui est agencé sur la face externe dudit premier revêtement (12).

5. Elément actif selon la revendication 4, **caractérisé en ce que** ledit barreau allongé (2) présente une section transversale circulaire, **en ce que** ledit premier revêtement (12) comporte un matériau d'interface (15) qui assure une jonction thermique et mécanique, qui est prévu sur la périphérie dudit barreau (2) et qui présente un indice de réfraction inférieur à celui dudit barreau, et **en ce que** ledit second revêtement (14) comporte une monture (16) en matériau absorbant, qui entoure ledit barreau (2) muni dudit matériau d'interface (15).

6. Elément actif selon l'une des revendications 1 à 5, **caractérisé en ce que** ledit premier revêtement (12) comporte une couche mince qui présente un indice de réfraction inférieur à celui dudit barreau (2).

7. Elément actif selon l'une des revendications 1 à 5, **caractérisé en ce que** ledit barreau (2) présente des faces latérales planes (2A à 2D), et **en ce que** ledit premier revêtement (12) comporte des plaques (17A à 17D) qui sont soudées sur lesdites faces latérales planes (2A à 2D) dudit barreau (2) et qui sont réalisées en un matériau présentant un indice de réfraction inférieur à celui dudit barreau (2).

8. Elément actif selon l'une quelconque des revendications 1 à 7, **caractérisé en ce que** ledit barreau (12) est formé d'au moins un matériau présentant une variation longitudinale de dopage avec un dopage le plus faible, limité à une valeur prédéterminée, au niveau d'une face d'entrée (11) du faisceau de pompage (3).

9. Elément actif selon la revendication 8, **caractérisé en ce que** ledit matériau présente une variation longitudinale de dopage continue.

10. Elément actif selon la revendication 8, **caractérisé en ce que** ledit matériau présente une variation longitudinale de dopage par pas.

11. Elément actif selon l'une des revendications 9 ou 10, **caractérisé en ce que** ledit matériau comporte une céramique à gradient de dopage.

12. Elément actif selon la revendication 10, **caractérisé en ce que** ledit matériau comporte plusieurs cristaux de dopages différents.

13. Elément actif selon la revendication 12, **caractérisé en ce que** ledit matériau comporte un cristal YAG/Nd et un cristal YV04/Nd.

14. Elément actif selon la revendication 13, **caractérisé en ce que** ledit cristal YAG/Nd est disposé en amont dudit cristal YV04/Nd.

15. Source laser comportant :

   - un élément actif (1) pour source laser ;
   - un système de pompage (6) muni de diodes laser (6A) qui sont susceptibles d'émettre au moins un faisceau de pompage (3) ;
   - un système optique de transport (7) pour diriger le faisceau de pompage (3) émis par lesdites diodes laser (6A) dans ledit élément actif (1) de manière à obtenir un pompage longitudinal ; et
   - une cavité optique (8) permettant d'extraire au moins un rayonnement laser (4),

   **caractérisée en ce que** ledit élément actif (1) est du type de celui spécifié sous l'une quelconque des revendications 1 à 14.

16. Source laser selon la revendication 14, **caractérisée en ce que** ledit système de pompage (6) est formé de manière à engendrer un faisceau de pompage (3) qui comporte une stabilité de l'énergie déposée stable à plus de 20% sur plusieurs dizaines de degrés.

17. Source laser selon l'une des revendications 15 et 16, **caractérisée en ce que** ledit système de pompage (6) est formé de manière à engendrer un faisceau de pompage (3) qui est compris dans un angle solide prédéterminé relatif audit barreau (2).

18. Source laser selon l'une quelconque des revendications 15 à 17, **caractérisée en ce que** ledit système de pompage (6) comporte des modules de diodes (6A), formés de semi-conducteurs issus de différents disques.

19. Source laser selon la revendication 18, **caractérisée en ce que** chaque module de diodes (6A) comporte un moyen de refroidissement individuel.

20. Source laser selon l'une quelconque des revendications 15 à 18, **caractérisée en ce qu'**elle comporte une structure dans laquelle les diodes laser (6A) dissipent leur énergie.

21. Source laser selon l'une quelconque des revendications 15 à 20, **caractérisée en ce qu'**elle comporte, de plus, des moyens pour engendrer au moins un double passage du faisceau de pompage (3) dans l'élément actif (1).

22. Source laser selon l'une quelconque des revendications 15 à 21, **caractérisée en ce que** ledit système de pompage (6) comporte deux unités de pompage destinées à pomper le barreau (2) par ses deux extrémités.

**Claims**

1. An active element for a laser source, said active element (1) comprising:

   - an elongate rod (2) which comprises a doped matrix capable of absorbing at least one pump beam (3) in order to amplify at least laser radiation (4) propagating longitudinally;
   - a first coating (12) that is placed on the periphery of said rod (2) and is capable of reflecting the pump beam (3); and

- an absorption means (13) for absorbing radiation that passes through the periphery of said rod (2) and has a wavelength substantially equal to that of said laser radiation (4),

**characterized in that** the length (L) of said elongate rod (2) is adapted to the absorption coefficient of said elongate rod (2) which depends on the wave length $\lambda$, and **in that** said length (L) is more than $2,3/\alpha(\lambda)$ with $\alpha(\lambda)$ the lowest absorption coefficient on an operating spectral range.

2. The active element as claimed in claim 1, **characterized in that** said first coating (12) is formed so as to also correspond to said absorption means (13).

3. The active element as claimed in claim 2, **characterized in that** the material of said first coating (12) is filled with an absorbent substance.

4. The active element as claimed in claim 1, **characterized in that** said absorption means (13) corresponds to a second coating (14) that is placed on the external face of said first coating (12).

5. The active element as claimed in claim 4, **characterized in that** said elongate rod (2) has a circular cross section, **in that** said first coating (12) comprises an interface material (15), which provides a thermal and mechanical junction, which is placed on the periphery of said rod (2) and has a lower refractive index than said rod, and **in that** said second coating (14) comprises a mount (16) made of absorbent material, which surrounds said rod (2) provided with said interface material (15).

6. The active element as claimed in one of claims 1 to 5, **characterized in that** said first coating (12) comprises a thin film having a lower refractive index than said rod (2).

7. The active element as claimed in one of claims 1 to 5, **characterized in that** said rod (2) has plane lateral faces (2A to 2D) and **in that** said first coating (12) comprises plates (17A to 17D) that are welded to said plane lateral faces (2A to 2D) of said rod (2) and are made of a material having a lower refractive index than said rod (2).

8. The active element as claimed in one of claims 1 to 7, **characterized in that** said rod (12) is formed from at least one material having a longitudinal variation in doping, with the lowest doping limited to a predetermined value, on an entrance face (11) for the pump beam (3).

9. The active element as claimed in claim 8, **characterized in that** said material has a continuous longitudinal variation in doping.

10. The active element as claimed in claim 8, **characterized in that** said material has a stepped longitudinal variation in doping.

11. The active element as claimed in one of claims 9 or 10, **characterized in that** said material comprises a ceramic with a doping gradient.

12. The active element as claimed in claim 10, **characterized in that** said material comprises several differently doped crystals.

13. The active element as claimed in claim 12, **characterized in that** said material comprises an Nd:YAG crystal and an Nd:YV04 crystal.

14. The active element as claimed in claim 13, **characterized in that** said Nd:YAG crystal is placed upstream of said Nd:YV04 crystal.

15. A laser source comprising:

- an active element (1) for a laser source;
- a pumping system (6) provided with laser diodes (6A) that are capable of emitting at least one pump beam (3);
- an optical transport system (7) for directing the pump beam (3) emitted by said laser diodes (6A) into said active element (1) so as to obtain longitudinal pumping; and
- an optical cavity (8) for extracting at least laser radiation (4),

**characterized in that** said active element (1) is of the type specified in any one of claims 1 to 14.

16. The laser source as claimed in claim 14, **characterized in that** said pumping system (6) is formed so as to generate a pump beam (3) with stability of the energy deposited, stable to better than 20% over several tens of degrees.

17. The laser source as claimed in one of claims 15 and 16, **characterized in that** said pumping system (6) is formed so as to generate a pump beam (3) lying with a predetermined solid angle relative to said rod (2).

18. The laser source as claimed in one of claims 15 to 17, **characterized in that** said pumping system (6) comprises modules of diodes (6A), which modules are formed of semiconductors coming from various wafers.

19. The laser source as claimed in claim 18, **characterized in that** each module of diodes (6A) includes an individual cooling means.

**20.** The laser source as claimed in one of claims 15 to 18, **characterized in that** said laser source has a structure in which the laser diodes (6A) dissipate their energy.

**21.** The laser source as claimed in one of claims 15 to 20, **characterized in that** said laser source also includes means for generating at least one double pass of the pump beam (3) in the active element (1).

**22.** The laser source as claimed in one of claims 15 to 21, **characterized in that** said pumping system (6) comprises two pumping units designed to pump the rod (2) via its two ends.

**Patentansprüche**

**1.** Aktives Element für eine Laserquelle, wobei das aktive Element (1) umfasst:

- einen langgestreckten Stab (2), der eine dotierte Matrix umfasst, die geeignet ist, mindestens einen Pumpstrahl (3) zu absorbieren, um mindestens eine Laserstrahlung (4) zu verstärken, die sich in Längsrichtung ausbreitet;
- eine erste Beschichtung (12), die am Umfang des Stabs (2) angebracht ist und die geeignet ist, den Pumpstrahl (3) zu reflektieren; und
- ein Absorptionsmittel (13), das es ermöglicht, eine Strahlung zu absorbieren, die durch den Umfang des Stabs (2) tritt und die eine Wellenlänge aufweist, die im Wesentlichen gleich jener der Laserstrahlung (4) ist,

**dadurch gekennzeichnet, dass** die Länge L des langgestreckten Stabs (2) an den Absorptionskoeffizienten des langgestreckten Stabs (2) angepasst ist, der von der Wellenlänge $\lambda$ abhängt, und dass die Länge L größer als $2,3/\alpha(\lambda)$ ist, wobei $\alpha(\lambda)$ der niedrigste Absorptionskoeffizient über einen Betriebsspektralbereich ist.

**2.** Aktives Element nach Anspruch 1, **dadurch gekennzeichnet, dass** die erste Beschichtung (12) derart ausgebildet ist, dass sie auch dem Absorptionsmittel (13) entspricht.

**3.** Aktives Element nach Anspruch 2, **dadurch gekennzeichnet, dass** in das Material der ersten Beschichtung (12) eine absorbierende Substanz eingebracht ist.

**4.** Aktives Element nach Anspruch 1, **dadurch gekennzeichnet, dass** das Absorptionsmittel (13) einer zweiten Beschichtung (14) entspricht, die auf der Außenseite der ersten Beschichtung (12) gebildet ist.

**5.** Aktives Element nach Anspruch 4, **dadurch gekennzeichnet, dass** der langgestreckte Stab (2) einen kreisförmigen Querschnitt aufweist, dass die erste Beschichtung (12) ein Grenzflächenmaterial (15) umfasst, das eine thermische und mechanische Verbindung gewährleistet, das am Umfang des Stabs (2) vorgesehen ist und das einen Brechungsindex aufweist, der niedriger ist als jener des Stabs, und dass die zweite Beschichtung (14) eine Einfassung (16) aus absorbierendem Material umfasst, die den mit dem Grenzflächenmaterial (15) versehenen Stab (2) umgibt.

**6.** Aktives Element nach einem der Ansprüche 1 bis 5, **dadurch gekennzeichnet, dass** die erste Beschichtung (12) eine dünne Schicht umfasst, die einen Brechungsindex aufweist, der niedriger ist als jener des Stabs (2).

**7.** Aktives Element nach einem der Ansprüche 1 bis 5, **dadurch gekennzeichnet, dass** der Stab (2) ebene Seitenflächen (2A bis 2D) umfasst und dass die erste Beschichtung (12) Platten (17A bis 17D) umfasst, die an die ebenen Seitenflächen (2A bis 2D) des Stabs (2) geschweißt sind und die aus einem Material hergestellt sind, das einen Brechungsindex aufweist, der niedriger ist als jener des Stabs (2).

**8.** Aktives Element nach einem der Ansprüche 1 bis 7, **dadurch gekennzeichnet, dass** der Stab (12) aus mindestens einem Material gebildet ist, das eine Veränderung der Dotierung entlang der Längsrichtung aufweist, wobei sich die niedrigste Dotierung, die auf einen vorbestimmten Wert begrenzt ist, im Bereich einer Eintrittsfläche (11) des Pumpstrahls (3) befindet.

**9.** Aktives Element nach Anspruch 8, **dadurch gekennzeichnet, dass** das Material eine kontinuierliche Veränderung der Dotierung in Längsrichtung aufweist.

**10.** Aktives Element nach Anspruch 8, **dadurch gekennzeichnet, dass** das Material eine schrittweise Veränderung der Dotierung in Längsrichtung aufweist.

**11.** Aktives Element nach einem der Ansprüche 9 oder 10, **dadurch gekennzeichnet, dass** das Material eine Keramik mit Dotierungsgradient umfasst.

**12.** Aktives Element nach Anspruch 10, **dadurch gekennzeichnet, dass** das Material mehrere Kristalle mit unterschiedlichen Dotierungen umfasst.

13. Aktives Element nach Anspruch 12, **dadurch gekennzeichnet, dass** das Material einen YAG/Nd-Kristall und einen YV04/Nd-Kristall umfasst.

14. Aktives Element nach Anspruch 13, **dadurch gekennzeichnet, dass** der YAG/Nd-Kristall dem YV04/Nd-Kristall vorgelagert ist.

15. Laserquelle, umfassend:

    - ein aktives Element (1) für eine Laserquelle;
    - ein Pumpsystem (6), das mit Laserdioden (6A) versehen ist, die geeignet sind, mindestens einen Pumpstrahl (3) auszusenden;
    - ein optisches Transportsystem (7), um den von den Laserdioden (6A) ausgesendeten Pumpstrahl (3) in das aktive Element (1) zu leiten, um ein longitudinales Pumpen zu erzielen; und
    - einen optischen Resonator (8), der es ermöglicht, mindestens eine Laserstrahlung (4) zu hervorzubringen,

    **dadurch gekennzeichnet, dass** das aktive Element (1) von dem in einem der Ansprüche 1 bis 14 spezifizierten Typ ist.

16. Laserquelle nach Anspruch 14, **dadurch gekennzeichnet, dass** das Pumpsystem (6) derart ausgebildet ist, dass es einen Pumpstrahl (3) erzeugt, der eine Stabilität der eingebrachten Energie mit sich bringt, die über mehrere zehn Grad zu mehr als 20% stabil ist.

17. Laserquelle nach einem der Ansprüche 15 und 16, **dadurch gekennzeichnet, dass** das Pumpsystem (6) derart ausgebildet ist, dass es einen Pumpstrahl (3) erzeugt, der sich in Bezug auf den Stab (2) innerhalb eines vorbestimmten Raumwinkels befindet.

18. Laserquelle nach einem der Ansprüche 15 bis 17, **dadurch gekennzeichnet, dass** das Pumpsystem (6) Diodenmodule (6A) umfasst, die aus Halbleitern gebildet sind, die aus verschiedenen Scheiben hervorgegangen sind.

19. Laserquelle nach Anspruch 18, **dadurch gekennzeichnet, dass** jedes Diodenmodul (6A) ein individuelles Kühlmittel umfasst.

20. Laserquelle nach einem der Ansprüche 15 bis 18, **dadurch gekennzeichnet, dass** sie eine Struktur umfasst, in der die Laserdioden (6A) ihre Energie abführen.

21. Laserquelle nach einem der Ansprüche 15 bis 20, **dadurch gekennzeichnet, dass** sie darüber hinaus Mittel umfasst, um mindestens einen doppelten Durchgang des Pumpstrahls (3) in dem aktiven Element (1) hervorzurufen.

22. Laserquelle nach einem der Ansprüche 15 bis 21, **dadurch gekennzeichnet, dass** das Pumpsystem (6) zwei Pumpeinheiten umfasst, die dazu bestimmt sind, den Stab (2) über seine beiden Enden zu pumpen.

Fig. 1

Fig. 2

Fig. 3

EP 1 717 914 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2803697
- US 20050018743 A
- EP 0583944 A
- US 5572541 A
- DE 19531756